# EUROPÄISCHE PATENTSCHRIFT

(11) **EP 4 094 643 B1**
(45) Veröffentlichungstag und Bekanntmachung des Hinweises auf die Patenterteilung: **18.11.2026**
(21) Anmeldenummer: 21176542.5
(22) Anmeldetag: 28.05.2021
(51) Int. Cl.: A47J 36/32

(54) **KONTROLLVERFAHREN FÜR EIN KÜCHENGERÄTESYSTEM**
CONTROL METHOD FOR A KITCHEN APPLIANCE SYSTEM
PROCÉDÉ DE VÉRIFICATION POUR UN SYSTÈME DE ROBOT DE CUISINE

(43) Veröffentlichungstag der Anmeldung: 30.11.2022
(73) Patentinhaber: Vorwerk & Co. Interholding GmbH, 42270 Wuppertal (DE)
(72) Erfinder: Stein, Matthias, 45472 Mülheim an der Ruhr (DE); Uhlenbrock, Andreas, 80687 München (DE); Ott, Kristina, 10967 Berlin (DE); Dering, Ingo, 42929 Wermelskirchen (DE); Abels, Michael, 50259 Pulheim (DE)
(74) Vertreter: Bals & Vogel Patentanwälte PartGmbB

(56) Entgegenhaltungen:
- WO-A2-2015/171630
- US-A1- 2019 001 288

## Beschreibung

Die vorliegende Erfindung ist auf ein Verfahren zur Kontrolle eines Küchengerätesystems mit zumindest 2 Küchengeräten, zur automatischen Abarbeitung wenigstens eines Arbeitsschrittes eines Rezeptes für eine Zubereitung einer Speise gemäß des Oberbegriffs vom unabhängigen Verfahrensanspruch gerichtet. Ferner umfasst die Erfindung auch eine Vorrichtung zur Kontrolle eines Küchengerätesystems mit zumindest 2 Küchengeräten, zur automatischen Abarbeitung wenigstens eines Arbeitsschrittes eines Rezeptes für eine Zubereitung einer Speise gemäß des unabhängigen Vorrichtungsanspruchs. Des Weiteren ist die vorliegende Erfindung auch Computerprogrammprodukt nach entsprechendem Anspruch zur Durchführung des erfindungsgemäßen Verfahrens gerichtet.

Haushaltsküchengeräte mit komplexen Funktionen, wie z. B. Kochen, Rühren, Wiegen, Zeitmessung etc., die auf digitale Rezepte zur teilautomatisierten Zubereitung einer Speise zugreifen können, sind bekannt. Zur Zubereitung einer Speise arbeitet sich ein Benutzer sukzessive durch die Rezeptschritte in der von dem Rezept vorgegebenen Reihenfolge wie beim Kochen nach einem Rezept in einem Kochbuch. Auch ist es aus dem Stand der Technik bekannt, dass die Funktionalitäten verschiedener Küchengeräte in manueller oder teilweise automatisierter Weise komplementär genutzt werden können. Bspw. sind in einer Küche verschiedene Geräte zur Bereitstellung von Funktionen zur Zubereitung von Lebensmitteln vorhanden. Bei einer Zubereitung gemäß eines Rezeptes verwendet ein Benutzer diese unterschiedlichen Küchengeräte entsprechend der einzelnen Rezeptschritte, sodass bspw. zunächst ein Zerkleinern und Kochen eines Lebensmittels in einem Küchengeräte stattfindet und anschließend ein Garen mit einem weiteren Lebensmittel in einem Backofen erfolgt.

Derartige Küchengeräte können zu einem Küchengerätesystem durch Vernetzung miteinander verbunden werden, um die teilautomatisierte Zubereitung der gewünschten Speise über ein Gerät hinaus zu erreichen. Hierbei ist die Bedienung der vorhandenen Geräte aufgrund der Komplexität des Systems aufwendig und schwierig, insbesondere wenn nur eine kleine Anzeige (Display) zur Kontrolle des Verfahrens und eine Vielzahl von zu koordinierenden Küchengeräten zur Verfügung stehen. So müssen die verschiedenen Küchengeräte je nach Rezeptschritt im Rezept den jeweiligen nächsten Arbeitsschritt auf dem entsprechenden Küchengerät ausüben, wobei die Reihenfolge durch manuelle Zwischenschritte, wie bspw. die Zugabe von Gewürzen oder Wasser schnell durcheinandergerät. Damit muss der Benutzer einerseits nach Rezept und andererseits nach Küchengerät die Einleitung des nächsten Arbeitsschrittes vornehmen, was teilweise mit einem erheblichen Kontroll- und/ Such-Aufwand für den Benutzer zur Einhaltung der erforderlichen Reihenfolge der Arbeitsschritte verbunden ist. Ein solches Küchengerät wird in WO2015/171630 offenbart.

Es ist daher eine Aufgabe der vorliegenden Erfindung, die voranstehend beschriebenen Nachteile zumindest teilweise zu beheben. Insbesondere ist es Aufgabe der vorliegenden Erfindung, die Übersicht für einen Benutzer sowie die Kontrolle des Küchengerätesystems sowie ggf. der einzelnen Küchengeräte, insbesondere bei der Abarbeitung eines Rezepts, zu verbessern.

Die voranstehende Aufgabe wird gelöst durch ein Verfahren zur Kontrolle eines Küchengerätesystems mit den Merkmalen des unabhängigen Verfahrensanspruchs, durch eine Vorrichtung zur Kontrolle eines Küchengerätesystems mit den Merkmalen des nebengeordneten Vorrichtungsanspruchs sowie durch ein Computerprogrammprodukt mit den Merkmalen des entsprechenden Anspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Kontrollverfahren beschrieben sind, selbstverständlich auch im Zusammenhang mit der erfindungsgemäßen Vorrichtung sowie dem erfindungsgemäßen Computerprogrammprodukt, und jeweils umgekehrt, so dass bezüglich der Offenbarung zu den einzelnen Erfindungsaspekten stets wechselseitig Bezug genommen wird bzw. werden kann.

Die Aufgabe wird gelöst durch ein Verfahren zur Kontrolle eines Küchengerätesystems, zur automatischen Abarbeitung wenigstens eines Arbeitsschrittes eines Rezeptes für eine Zubereitung einer Speise, mit Hilfe eines zentralen Steuergerätes mit zumindest einem Benutzereingabegerät und einer (Daten-)Schnittstelle. Dabei umfasst das Küchengerätesystem zumindest 2 Küchengeräte, die in einer (digitalen) Geräteliste eingetragen sind und jedes Küchengerät aus der Geräteliste eine (Daten-)Schnittstelle aufweist, wodurch diese von dem zentralen Steuergerät kontrollierbar ist, und wobei jedes Küchengerät über zumindest eine Gerätefunktion verfügt, die durch wenigstens einen Parameter auswählbar und/oder einstellbar ist, um wenigstens einen Arbeitsschritt aus dem Rezept für die Zubereitung der Speise automatisch durch die jeweilige Gerätefunktion des Küchengerätes durchzuführen. Hierzu kann eine (digitale und gespeicherte) Rezeptliste vorhanden sein, in der zumindest 2 Rezepte vorhanden sind, wobei jedes Rezept entsprechende Arbeitsschritte zur Zubereitung der Speise aufweist. Unter Zubereitung einer Speise im Sinne der vorliegenden Erfindung wird auch die Zubereitung eines Getränks oder eines Lebensmittels oder eines Teigs oder eines Eis oder dergleichen verstanden. Erfindungsgemäß ist es vorgesehen, dass das Benutzereingabegerät eine Benutzeroberfläche zur Anzeige und Steuerung des Verfahrens aufweist, wobei die Benutzeroberfläche selbst zumindest ein ein- und ausklappbares Übersichtsfeld aufweist, welches im eingeklappten Zustand des Übersichtsfelds Parameter von (nur) einem Küchengerät des Küchengerätesystems (mit seinen aktuellen Gerätefunktionen) anzeigt und in einem ausgeklappten Zustand des Übersichtsfelds zumindest teilweise oder die gesamte Geräteliste des Küchengerätesystems anzeigt, wobei (vorzugsweise gleichzeitig) Parameter von zumindest jedem aktiven Küchengerät mit der jeweiligen Gerätefunktion angezeigt werden. Unter einem aktiven Küchengerät (aus der Geräteliste) wird verstand, dass es eingeschaltet ist und über die vorhandene Schnittstelle datentechnisch durch das Kontrollverfahren erreichbar ist, um somit die Parameter austauschen zu können.

Durch das ein- und ausklappbare Übersichtsfeld kann selbst bei einer geometrisch kleinen Benutzeroberfläche (für eine kleine Anzeige / Display) die optimale Übersicht über sämtliche Küchengeräte des Küchengerätesystems erzielt werden, um so eine optimale Kontrolle für den Benutzer zu erreichen. Auch die Steuerung der Arbeitsschritte zur Zubereitung der Speise ist besonders einfach für den Benutzer, da er über das Ein- und Ausklappen des Übersichtsfeld jederzeit schnell und ohne großen Aufwand zum gewünschten Küchengerät gelangt, um dort den nächsten Arbeitsschritt (vom Rezept) einleiten und/oder ausführen zu können. Es sei an dieser Stelle klargestellt, dass auch im eingeklappten Zustand des Übersichtsfelds, das Übersichtfeld mit einer Mindestgröße auf der Benutzeroberfläche erhalten bleibt, um den Zustand von (ausschließlich) einem Küchengerät mit den entsprechenden Parametern anzuzeigen. Auch kann das ein- und ausklappbare Übersichtsfeld permanent auf der Benutzeroberfläche (zur optimalen Kontrolle für den Benutzer) angezeigt werden.

Der Begriff: Kontrolle bzw. kontrollieren soll im Sinne der Erfindung, die Bedeutung von Steuern und Regeln umfassen, wobei vorzugsweise die Kontrolle automatisch erfolgt.

Mit Rezept ist vorzugsweise ein digitales Rezept gemeint, das mit anderen Rezepten in der Rezeptliste zusammengefasst ist. Ein digitales Rezept ist ferner ein Datensatz, der mehrere Arbeitsschritte für eine elektrisch betreibbare Funktionskomponente des Küchengeräts, eine sogenannte Gerätefunktion definiert. Die Definition der Arbeitsschritte umfasst mindestens jeweils eine Startbedingung. Jedem Arbeitsschritt werden darüber hinaus Steuerbefehle in Form von Parametern für eine oder mehrere elektrisch betreibbare Funktionskomponenten des Küchengeräts bzw. Gerätefunktionen zugeordnet. Optional kann die Definition des Rezepts zusätzlich Methoden oder Algorithmen umfassen, anhand derer das Steuergerät in Abhängigkeit von mindestens einem gemessenen Parameter ermitteln kann, ob eine Startbedingung erfüllt ist. Insbesondere kann die Definition eine Priorisierungsinformation und/oder einen Priorisierungs-Algorithmus (in Form von Daten) enthalten, um beispielsweise den benötigen Zeitaufwand zum Abarbeiten der Arbeitsschritte zu verkürzen oder den Arbeitsaufwand für den Benutzer zu reduzieren.

Das zentrale Steuergerät weist zumindest das Benutzereingabegerät sowie eine Schnittstelle zur Kommunikation mit anderen Geräten, vorzugsweise Küchengeräten auf. Dabei kann das zentrale Steuergerät eine eigene Baueinheit darstellen oder verteilt mit seinen Einheiten in einem übergeordneten Gerät oder Vorrichtung angeordnet sein. Das Benutzereingabegerät umfasst zumindest eine Anzeige und ein Eingabegerät, die auch miteinander kombiniert sein können, z. B. bei einem Touch-Screen. Auch können die Anzeige und das Eingabegerät (bspw. Tasten, Tastatur, Maus, Multifunktionsknopf vorzugsweise drehbar, schwenkbar und drückbar, Joystick, Touch-Pad) getrennt voneinander ausgestaltet sein. Ferner weist das zentrale Steuergerät idealerweise auch einen Datenspeicher für reine Daten (z. B. in Form von Parametern) und ausführbare Programmcodes auf und eine Datenverarbeitungseinheit, insbesondere Microprozessor zur automatischen Abarbeitung des Programmcodes.

Die Geräteliste ist eine Datenliste in der die erreichbaren und/oder ansteuerbaren Küchengeräte des Küchengerätesystems gespeichert sind. Die Geräteliste und/oder die Rezeptliste können ebenfalls im Datenspeicher des zentralen Steuergeräts gespeichert sein. Zweckmäßigerweise haben sich die Küchengeräte zumindest authentisiert, authentifiziert oder autorisiert, um in die Geräteliste eingetragen werden zu können (siehe unten). Durch diese Maßnahmen sollen Manipulationen und Missbrauch verhindert werden.

Unter dem Begriff: Parameter wird ein vorzugsweise bidirektionaler Datensatz verstanden, der die konkrete Funktionskomponente bzw. Gerätefunktion eines Küchengeräts kontrolliert bzw. steuert, wobei neben der Gerätefunktion auch Ein- und Ausgabe-Daten zum Betrieb der Gerätefunktion vorhanden sein können, z. B.:
a) Heizung (z. B. vom Herd, Ofen, Kochgerät etc.), Soll-Temperatur und Ist-Temperatur, Heizdauer, Lüfter etc.
b) Heizbetrieb einer Heizung mit Heizzone und Heizart
c) Rührwerk vom Mixer, Soll-Drehzahl und Ist-Drehzahl, Drehrichtung, Unterbrechungen, Dauer etc.
d) Beleuchtung Ofen, Einschalten
e) Temperatur eines Zusatzthermometers.

Bei dem Zusatzthermometer (Punkt e) ist die Gerätefunktion nur die Ist-Temperatur des Thermometers, die als Parameter abfragbar und somit anzeigbar ist.

Das Küchengerät kann ein Gerät mit nur einer Gerätefunktion, bspw. Thermometer, oder ein Gerät mit vielen komplexen Funktionen, bspw. Küchenmaschinen mit zumindest teilweise automatisierten oder vollautomatisierten Gerätefunktionen zur vollständig automatischen Zubereitung von Speisen sein. Auch kann bspw. ein Mixer, ein Toaster, eine Kaffeemaschine, ein Herd, ein Offen, eine Mikrowelle, ein Kühlschrank, eine Dunstabzugshaube, ein Wasserkocher, elektrische Pfanne oder Topf als Küchengerät angesehen werden. Ferner ist es denkbar, dass zumindest eines der Küchengeräte als ein sonstiges Gerät ausgeführt ist, wie bspw. eine Musikanlage, ein Fernseher, ein Computer, eine Lichteinheit oder dergleichen.

Bevorzugt sind die Küchengeräte vollständig separat und/oder räumlich beabstandet voneinander ausgeführt. Es handelt sich somit um separate Küchengeräte, welche bspw. nur über eine Schnittstelle miteinander in Verbindung stehen, um insbesondere Daten zumindest in Form von den erwähnten Parametern auszutauschen. Bevorzugt umfasst jedes Gerät eine Elektronik, welche jeweils unabhängig voneinander arbeitet. Insbesondere sind sämtliche Geräte unterschiedlich und/oder baulich getrennt (nicht in einem Gehäuse) voneinander ausgeführt.

Auch ist es im Rahmen der Erfindung möglich, dass im eingeklappten Zustand des Übersichtsfelds von nur einem Küchengerät des Küchengerätesystems ausschließlich Parameter über zumindest eine aktuelle (gemeint ist: zeitlich gerade ausgeführten) Gerätefunktion, vorzugsweise:
- Zeitangabe, insbesondere über die Restzeit der Gerätefunktion
- Temperatur, insbesondere Soll- und/oder Ist-Temperatur
- Gewicht und/oder Art der Speise
- Rührfunktion, insbesondere Rührstufe oder Drehzahl
- Heizbetrieb beim Ofen
- Feuchtigkeitsangabe
- Ventilatorbetrieb
- Füllstand (Kaffeemaschine Wasser/Kaffee/Milch)
- Verbrauchsstand usw.
(in einer Zeile symbolisiert) angezeigt wird. Damit erhält der Benutzer direkt einen Überblick über die wichtigsten Informationen im laufenden Zubereitungsverfahren für die Speise.

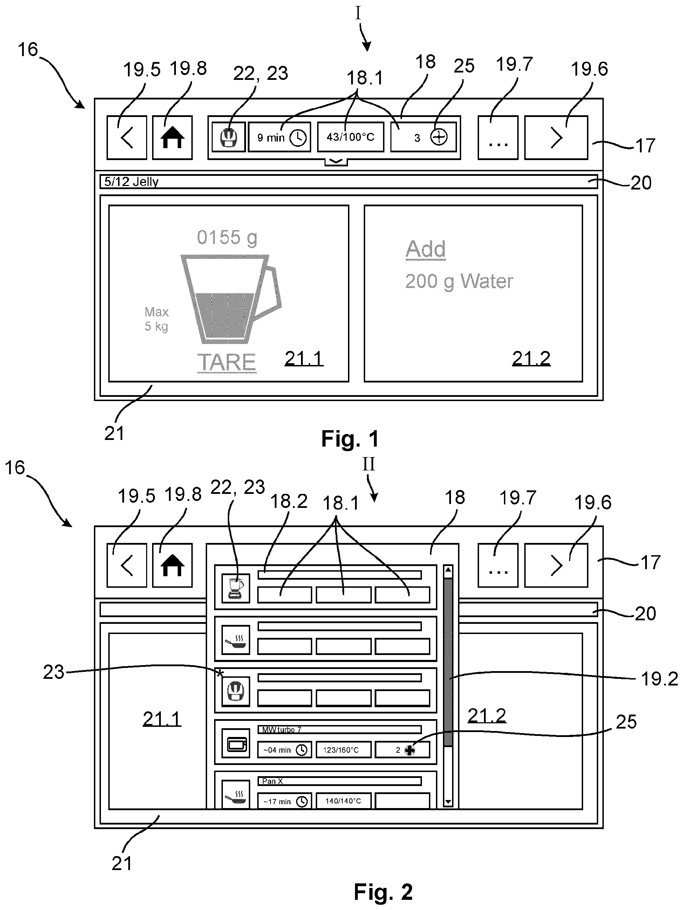

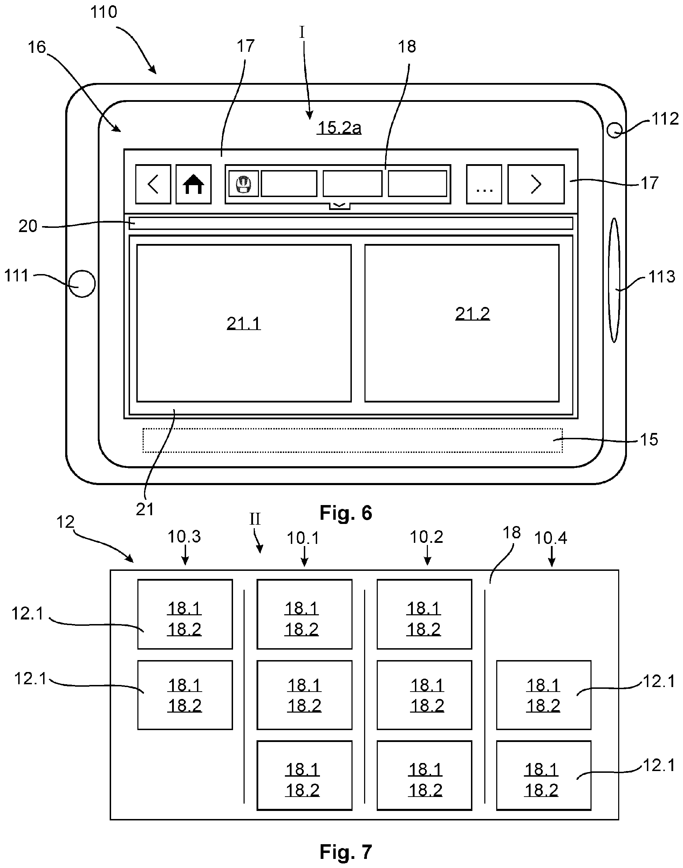

In einem ausgeklappten Zustand des Übersichtsfelds kann hingegen die Geräteliste des Küchengerätesystems (mit allen in der Geräteliste vorhandenen Küchengeräten) angezeigt werden, wobei jedes Küchengerät aus der Geräteliste mit einem Icon bzw. jedes Küchengerät einer Geräteklasse mit einem einheitlichen Icon (beispielsweise alle Öfen haben ein einheitliches Ofen-Icon oder jeder Mixer hat ein einheitliches Mixer-Icon, s. Fig. 2) symbolisiert werden kann und einen Gerätenamen aufweisen kann. Vorzugsweise können gleichzeitig die Parameter von jedem Küchengerät mit der jeweiligen Gerätefunktion abschnittsweise, insbesondere zeilenweise untereinander oder blockweise nebeneinander und untereinander, (optisch zusammengefasst) angezeigt werden. Damit erhält der Benutzer einen vollständigen Überblick über alle Küchengeräte mit ihren jeweiligen aktuellen (gerade ausgeführten) Gerätefunktionen. Ferner sind weitere visuelle Konzepte für das ausklappbare Übersichtsfeld wie folgt denkbar:
- Kanbanboard
- Gantdiagramm
- Ablaufdiagramm
- "U-Bahn"- Fahrplan,
um eine verbesserte Übersicht zu geben. Auch kann die Rezeptdarstellung (s. Fig. 7) mit ihren jeweiligen Arbeitsschritten für die jeweiligen Küchengeräten selber nach dem gleichen Prinzip erfolgen.

Möchte der Benutzer nun ein spezielles Küchengerät manuell ansteuern (für den nächsten Arbeitsschritt oder zu Kontrollzwecken), so kann er dieses durch seine Auswahl und Bestätigung des entsprechenden Küchengeräts im ausgeklappten Übersichtsfeld erreichen. Sollte jedoch das spezielle Küchengerät bereits im eingeklappten Übersichtsfeld angezeigt werden, so kann der Benutzer es direkt dort auswählen. Sofern das Benutzereingabegerät ein Touch-Screen (berührungssensitive Anzeige) ist, erfolgt die Auswahl und Bestätigung des entsprechenden Küchengeräts über eine Berührung des angezeigten (und ausgewählten) Küchengeräts im ausgeklappten Übersichtsfeld. Ansonsten kann die Auswahl und Bestätigung des entsprechenden Küchengeräts im ausgeklappten Übersichtsfeld über einen tasten- oder mausgesteuerten Cursor erfolgen. Nach der Auswahl und Bestätigung des entsprechenden Küchengeräts kann das ausgeklappten Übersichtsfeld automatisch in das eingeklappte Übersichtsfeld wechseln, wobei dort nun automatisch das ausgewählte Küchengerät mit seinen aktuellen (gerade ausgeführte) Gerätefunktionen angezeigt wird. Möchte der Benutzer nun ein spezielles Küchengerät manuell ansteuern (für den nächsten Arbeitsschritt oder zu Kontrollzwecken), welches zurzeit nicht im eingeklappten Übersichtsfeld gezeigt ist, so kann er dieses durch seine Auswahl und Bestätigung des gesamten (oder nur eines Teils vom) Übersichtsfeld erreichen, wodurch ein Wechsel zum ausgeklappten Übersichtsfeld mit dem entsprechenden Küchengerät erfolgt. Wie später noch erwähnt wird, kann auch ein automatischer Wechsel des Zustands des Übersichtsfelds und/oder des angezeigten Küchengeräts im eingeklappten Übersichtsfeld und/oder die Reihenfolge der angezeigten Küchengeräte ausgeklappten Übersichtsfeld erfolgen.

Auch ist es erfindungsgemäß denkbar, dass für jedes Küchengerät in der Geräteliste zumindest eine Aktivierungsmarkierung im ein- und ausklappbaren Übersichtsfeld angezeigt wird, wobei die Aktivierungsmarkierung anzeigt, ob zumindest
- das Küchengerät durch das Verfahren erreichbar und/oder ansteuerbar ist
- das Küchengerät ein- oder ausgeschaltet ist
- zumindest eine Gerätefunktion des Küchengeräts aktiv ist.

Durch die Aktivierungsmarkierung erkennt der Benutzer sofort und intuitiv durch das Übersichtsfeld den näheren aktuellen Zustand des Küchengeräts ohne diesen zusätzlich vom entsprechenden Gerät abfragen zu müssen, wodurch die Bedienung des Systems deutlich vereinfacht wird. Vorzugsweise dient das jeweilige Icon des Küchengeräts gleichzeitig als Aktivierungsmarkierung, so kann bspw. die Farbgebung des Icons direkt Aufschluss geben, z. B. Grün - Küchengeräts ist aktiv, Gelb - Küchengerät ist eingeschaltet aber inaktiv, Rot - Küchengerät ist nicht erreichbar und/oder ansteuerbar durch das Verfahren. Anstelle der Farbgebung des Icons kann auch ein Hintergrund des Icons oder eine ganz oder teilweise Invertierung des Icons als Aktivierungsmarkierung Aufschluss zum aktuellen Zustand des Geräts geben. Auch kann der Benutzer über eine Auswahl der Aktivierungsmarkierung vorgeben, welche Küchengeräte er priorisiert angezeigt bekommt.

Ferner kann es vorgesehen sein, dass ein Wechsel (a) zwischen dem eingeklappten und dem ausgeklappten Zustand des Übersichtsfelds und/oder (b) des angezeigten Küchengeräts im eingeklappten Übersichtsfeld und/oder (c) der Reihenfolge der angezeigten Küchengeräte im ausgeklappten Übersichtsfeld durch eine Aktivierung erfolgt, wobei die Aktivierung durch eine manuelle Auswahl und/oder ein Triggersignal und/oder durch ein eingehendes Warnsignal von einem Küchengerät und/oder zeitabhängig ansteuerbar ist. Die manuelle Auswahl für einen Wechsel beim Übersichtsfeld wurde bereits beschrieben. Ein Triggersignal kann bspw. durch Erreichen eines Ziels von einem Arbeitsschritt (aus dem Rezept), durch einen Zeitablauf bei einem Timer, durch Erreichen einer gewünschten Temperatur oder Festigkeit der Speise, durch Erreichen einer Drehzahl und/oder Ablauf einer Aufheizphase erzeugt werden, wodurch automatisch ein Wechsel beim Übersichtsfeld erzielt werden kann. Ein eingehendes Warnsignal kann ebenfalls einen automatischen Wechsel beim Übersichtsfeld erzielen, wobei das Warnsignal bspw. durch eine Temperaturüberschreitung, eine Zeitüberschreitung, eine Sicherheitsvorrichtung (z. B. Deckel fehlt), eine fehlende Drehung usw. erzeugt werden kann. Auch kann ein eingehendes Triggersignal und/oder Warnsignal von einem Küchengerät das Übersichtsfeld derart verändert, dass das entsprechende Küchengerät mit einem Warnhinweis (z. B. blinkendes Icon oder rotes Dreieck hinter dem Icon) bevorzugt, insbesondere mit seiner (kritischen/alarmauslösenden) Gerätefunktion automatisch angezeigt wird.

Des Weiteren ist es möglich, dass mehrere Küchengeräte zu wenigstens einer Geräteklasse zusammengefügt werden, wobei vorzugsweise im ausgeklappten Zustand des Übersichtsfelds die Geräteliste mit der vorhandenen Geräteklasse (durch Markierung oder in Bereichen) angezeigt werden. Damit kann der Benutzer sofort erkennen, ob optionale Geräte für einen Arbeitsschritt oder eine Gerätefunktion zur Verfügung stehen. Auch können sämtliche Geräte in einer Geräteklasse vorzugsweise mit der jeweiligen Gerätefunktion anzeigt werden, wodurch die Übersicht für einen Benutzer weiter verbessert wird.

Im eingeklappten Zustand des Übersichtsfelds kann das Küchengerät durch einen einstellbaren ersten Modus, der von dem Benutzer einstellbar ist oder bereits vordefiniert ist, angezeigt werden. Der erste Modus kann dabei folgendes umfassen:
1. Modus - Hauptgerät wird priorisiert angezeigt, wobei das Hauptgerät vom Benutzer aus den aktiven Küchengeräten ausgewählt und bestimmt wird
2. Modus - das gerade aktive Küchengerät
3. Modus - das Küchengerät mit dem nächsten manuellen Arbeitsschritt für einen Benutzer
4. Modus - das aktive Küchengerät mit der kürzesten Restlaufzeit eines Arbeitsschrittes
5. Modus - das Küchengerät mit einem Warnhinweis oder einer Fehlermeldung
6. Modus - das Küchengerät nach einer Priorisierung, z.B. manuelle Überwachung durch Benutzer erforderlich.

Der erste Modus kann frei durch den Benutzer ausgewählt und eingestellt werden, so dass er immer das von ihm gewünschte Gerät (nach seiner Auswahl des Modus) im eingeklappten Zustand des Übersichtsfelds angezeigt bekommt. Somit erhält der Benutzer immer eine optimalen Überblick über den aktuellen Verfahrensstand bei der Zubereitung seiner Speise. Auch ist es denkbar, dass der 1. Modus (softwaremäßig und/oder herstellermäßig) durch den Küchengerätehersteller vordefiniert und für einen Benutzer somit unveränderbar eingestellt ist.

Auch ist es denkbar, dass im ausgeklappten Zustand des Übersichtsfelds die Geräteliste in einem (vom Benutzer) einstellbaren oder bereits vordefinierten zweiten Modi angezeigt werden kann, wobei die Reihenfolge der Geräte in einem
1. Modus die Geräte nach Gerätklassen,
2. Modus die Geräte nach ihrer Aktivität
3. Modus die Geräte nach einer Priorisierung,
4. Modus die Geräte nach einer (zeitlichen) Reihenfolge der nächsten Arbeitsschritte aus dem Rezept und
5. Modus die Geräte nach einem Warnsignal
angezeigt werden. Auch der 2. Modus kann durch den Küchengerätehersteller (softwaremäßig und/oder herstellermäßig) vordefiniert und für einen Benutzer somit unveränderbar eingestellt sein.

Durch den Einsatz der verschiedenen Modis kann die Übersicht des Kontrollverfahrens für den Benutzer verbessert werden. Auch hilft ihm die bessere Übersicht bei der Abarbeitung der nächsten Arbeitsschritte für die Zubereitung seiner Speise. Hierbei kann der Modus (für den Benutzer frei) auswählbar sein (bspw. über eine Optionstaste / Eingabetaste Option) und die Reihenfolge der angezeigten Geräte (selbst von oben nach unten bzw. von unten nach oben) veränderbar sein. Damit kann der Benutzer sich auf einfache Art und Weise seine gewünschte Ansicht des Übersichtsfelds selbst konfigurieren.

Der erste und zweite einstellbare Modus kann beispielsweise (nur) durch die Vorauswahl des jeweiligen Zustandes des Übersichtsfelds erreichbar und auswählbar sein.

Auch kann es vorgesehen sein, dass die Benutzeroberfläche neben dem ein- und ausklappbaren Übersichtsfeld auch zumindest ein Bedienfeld für zumindest eine Gerätefunktion des Küchengeräts aufweist, wobei vorzugsweise das Bedienfeld des Küchengeräts und das eingeklappte Übersichtsfeld (mit dem Küchengerät) gleichzeitig (und vollständig), zur optimalen Übersicht, angezeigt werden. Idealerweise ist das Bedienfeld weiter in zumindest ein Zustandsfeld und ein Anweisungsfeld unterteilt. Im Zustandsfeld kann der Zustand des jeweiligen Küchengeräts im Detail (teilweise oder vollständig) mit seinen aktuellen Parametern, Warnhinweisen etc. angezeigt werden. Wohingegen im Anweisungsfeld zumindest ein Parameter des jeweiligen Küchengeräts (aus dem Zustandsfeld) vom Benutzer veränderbar und ansteuerbar ist. Das Bedienfeld wird üblicherweise von dem ausgeklappten Übersichtsfeld überlappt, um einen einfachen und schnellen Wechsel des Küchengeräts vornehmen zu können.

Um die Bedienung des Verfahrens zu erleichtern, kann es vorgesehen sein, dass die Benutzeroberfläche des Benutzereingabegeräts einzelne Felder (wie auch Übersichtsfeld, Hauptinformationsfeld, Steuerungsfeld, Bedienfeld usw.) anzeigt, die gleichzeitig als Eingabetasten und/oder Scrollbalken zur Steuerung des Verfahrens durch das zentrale Steuergerät dienen, wodurch anhand von eingegebenen Parametern, die mit Hilfe der Benutzeroberfläche eingegeben worden sind, zumindest eine Gerätefunktion eines Küchengeräts ausgelöst wird. Mit anderen Worten löst die Auswahl und Aktivierung eines Feldes auf der Benutzeroberfläche im Hintergrund einen Verfahrensschritt aus, der üblicherweise als ausführbarer Programmcode (Computerprogramm) im Steuergerät, vorzugsweise in einem (Daten-)Speicher, hinterlegt ist und dann in einer Datenverarbeitungseinheit, insbesondere Microprozessor, ausgeführt wird. Über diese Felder können auch Werte eingegeben werden oder Funktionen, Geräte und dergleichen ausgewählt werden.

Zur Verbesserung der Übersicht, kann es weiterhin vorgesehen sein, dass die Benutzeroberfläche ein Hauptinformationsfeld mit Steuerungsfeldern für das Verfahren aufweist, wobei das Übersichtsfeld im eingeklappten Zustand im Hauptinformationsfeld integriert ist. Hierdurch kann eine besonders platzsparende Anordnung bei optimaler Bedienbarkeit und Übersicht erzielt werden. Ferner kann das Bedienfeld neben, vorzugsweise unterhalb des Hauptinformationsfelds gemeinsam angezeigt werden, um eine intuitive Bedienung für den Benutzer zu erreichen.

Wie bereits erwähnt, kann das Übersichtsfeld im ausgeklappten Zustand das Bedienfeld zumindest teilweise überlappen, um eine Auswahl des anzusteuernden Küchengerätes aus der Gerätliste auf einfache Art und Weise vornehmen zu können.

Um einen Datenaustausch in dem Küchengerätesystem zu ermöglichen, ist es denkbar, dass die (Daten-)Schnittstelle des jeweiligen Küchengeräts als drahtlose Schnittstelle ausgestaltet ist, wobei insbesondere die Schnittstelle als Nahbereichsfunktechnologie-Schnittstelle oder lokale drahtlose Netzwerkverbindungs-Schnittstelle, insbesondere in Form von WLAN- (nach Standard der IEEE-802.11-Familie), Wi-Fi -, UWB- (Ultra-Wide-Band) oder Bluetooth-Schnittstelle ausgestaltet ist. Die WLAN-, oder WiFi-Schnittstelle bietet den Vorteil eines schnellen Datenaustausches auch über größere Entfernungen. Auch ist darüber eine direkte Anbindung an ein Netzwerk möglich, um bspw. ins Internet zu gelangen oder das Verfahren durch weitere Geräte zu kontrollieren. Die Bluetooth-Schnittstelle ermöglicht eine besonders einfache Herstellung der Datenverbindung zwischen den Geräten. Ferner sollte bevorzugt ein geschützter und verschlüsselter Datenaustausch über die Schnittstellen erfolgen, um Manipulationen zu vermeiden. Hierfür ist es zweckmäßig, dass sich die Küchengeräte idealerweise authentisieren (Nachweis einer bestimmten Identität), authentifizieren (Prüfung dieses Identitätsnachweises), autorisieren (Gewähren des Zugangs zu den Privilegien) und/oder einen Schlüssel zum Verschlüsseln der Daten austauschen.

Gerade bei körpergefährdenden Gerätefunktionen ist eine hohe Sicherheit der Datenverbindung extrem wichtig, um Gefahren zu vermeiden.

Auch ist die vorliegende Erfindung auf eine Vorrichtung zur Kontrolle eines Küchengerätesystems (gemäß des unabhängigen Vorrichtungsanspruchs) gerichtet, zur automatischen Abarbeitung wenigstens eines Arbeitsschrittes eines Rezeptes für eine Zubereitung einer Speise, mit einem zentralen Steuergerät und zumindest einem Benutzereingabegerät und einer (Daten-)Schnittstelle, wobei das zentrale Steuergerät dazu ausgebildet ist, das Verfahren gemäß der vorherigen Ansprüche auszuführen. Damit kommen der erfindungsgemäßen Vorrichtung die gleichen Vorteile zu Gute, die bereits zum Verfahren beschrieben worden sind. Dabei kann die Vorrichtung selbst als Küchengerät ausgestaltet sein oder darin integriert sein.

Das entsprechende Küchengerät kann zumindest einen Behälter für die Zubereitung der Speisen, ein Rührwerk, welches in den Behälter hineinragt, und das zentrale Steuergerät mit zumindest dem Benutzereingabegerät und der (Daten-)Schnittstelle aufweisen, um bereits einige Gerätefunktionen selbst ausführen zu können. Ferner kann das Küchengerät über eine Heizung verfügen, um den Behälter bzw. den Inhalt im Behälter erwärmen zu können. Des Weiteren kann das Küchengerät eine Waage aufweisen, um somit das Gewicht der zu zuführenden Lebensmittel für die Speisezubereitung einfach ermitteln zu können. Anhand des Gewichts kann auch eine Anpassung des Rezepts automatisch durch das Steuergerät durch entsprechende Methoden und Algorithmen vorgenommen werden (bspw. Speise wird für 3 anstatt von 2 Personen zubereitet).

Auch ist es denkbar, dass die Vorrichtung selbst als Computer, Laptop, Tablet, Smart-Phone oder Smart-TV ausgestaltet ist. Gerade diese Geräte eignen sich besonders, um das zentrale Steuergerät mit seinem Benutzereingabegerät und der Schnittstelle auszubilden. Dabei verfügen diese Geräte auch über einen Datenspeicher für den Programmcode (Computerprogramm) und die Datenverarbeitungseinheit, insbesondere einen Microprozessor, um den Programmcode abzuarbeiten, wodurch insgesamt das erfindungsgemäße Verfahren besonders einfach realisierbar ist. Auch die Eingabe sowie das Einlesen von Daten für die Parameter sowie die Erfassung von Daten (der gemessenen Parameter) über die Schnittstelle ist damit komfortabel.

Schließlich umfasst die Erfindung auch ein Computerprogrammprodukt aufweisend Befehle, die bewirken, dass die erfindungsgemäße Vorrichtung das erfindungsgemäße Verfahren, die erforderlichen Verfahrensschritte ausführt. Ferner ist die Erfindung auch auf einen Datenspeicher mit dem Computerprogrammprodukt gerichtet.

Weitere Maßnahmen und Vorteile der vorliegenden Erfindung ergeben sich aus den Ansprüchen, der nachfolgenden Beschreibung und den Zeichnungen. Ebenfalls gelten die offenbarten Merkmale aus der erfindungsgemäßen Vorrichtung auch für das erfindungsgemäße Verfahren und umgekehrt. In den Zeichnungen ist die Erfindung in unterschiedlichen Ausführungsbeispielen dargestellt. Dabei können die in den Ansprüchen und in der Beschreibung erwähnten Merkmale jeweils einzeln für sich oder in beliebiger Kombination erfindungswesentlich sein. Es zeigen:
- Figur 1: schematische Darstellung einer Benutzeroberfläche mit einem eingeklappten Übersichtsfeld,
- Figur 2: vergleichbare Darstellung der Benutzeroberfläche aus Figur 1 jedoch mit einem ausgeklappten Übersichtsfeld,
- Figur 3: vergleichbare Benutzeroberfläche aus Figur 2, mit unterschiedlichen Aktivierungsmarkierungen im ausgeklappten Übersichtsfeld,
- Figur 4: schematische Darstellung einer erfindungsgemäßen Vorrichtung, in Form eines Küchengerätes mit einem (integrierten) zentralen Steuergerät, wobei das Küchengerät mit komplexen Funktionen ausgestattet ist,
- Figur 5: schematische Darstellung des gesamten Küchengerätesystems mit diversen Küchengeräten,
- Figur 6: schematische Darstellung einer weiteren erfindungsgemäßen Vorrichtung, in Form eines Tabletts mit einem (integrierten) zentralen Steuergerät und der Benutzeroberfläche zur Steuerung des Verfahrens, und
- Figur 7: schematische Darstellung des ausgeklappten Übersichtsfelds (eines Rezepts) mit Anordnung der Felder für die jeweiligen Küchengeräten mit Gerätenamen und -parameter nach einer Kanban-Darstellung.

In den nachfolgenden Figuren werden für die gleichen technischen Merkmale auch von unterschiedlichen Ausführungsbeispielen die identischen Bezugszeichen verwendet.

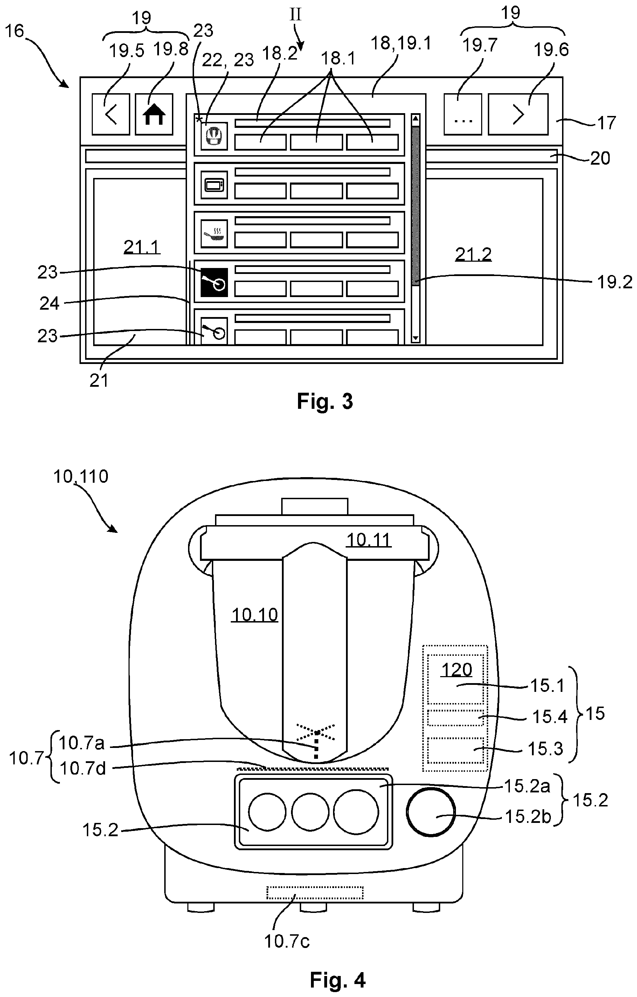

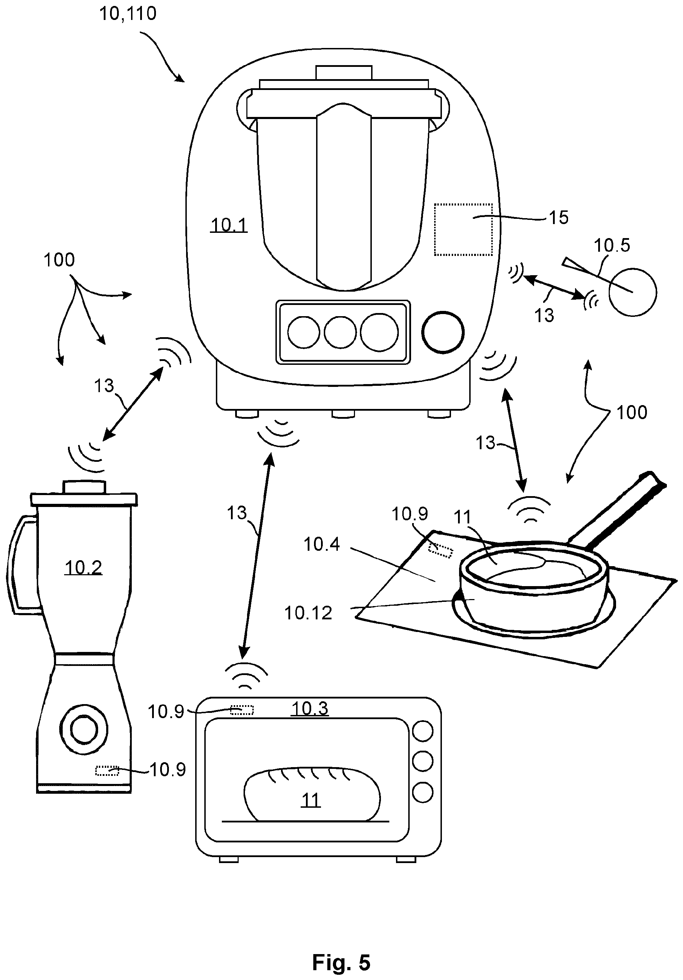

In der Figur 1 ist eine schematische Benutzeroberfläche 16 eines zentralen Steuergerätes 15 zur Anzeige und Steuerung des erfindungsgemäßen Verfahrens zur automatischen Abarbeitung wenigstens eines Arbeitsschrittes 12.1 eines Rezepts 12 für eine Zubereitung einer Speise 11 dargestellt. Diese Benutzeroberfläche 16 wird auf einer Anzeige 15.2b von einem Benutzereingabegerät 15.2 dargestellt (wie in Figur 4 und 5 gezeigt). Die Benutzeroberfläche 16 weist mehrere Bereiche bzw. Felder auf, die sich in ein Hauptinformationsfeld 17, ein Übersichtsfeld 18, welches ein aus- und ausklappbar ist, zumindest ein Steuerungsfelder 19, ein Erkennungsfeld 20 sowie ein Bedienfeld 21 untergliedern. Dabei können diese Felder nebeneinander auf der Benutzeroberfläche 16 angeordnet sein, um eine gute Übersicht für den Benutzer zu vermitteln.

Das Hauptinformationsfeld 17, welches vorzugsweise waagerecht im oberen Bereich der Benutzeroberfläche angeordnet ist, unterteilt sich in einzelne Steuerungsfelder 19, wie z. B. eine Eingabetaste zurück 19.5 eine Eingabetaste vor 19.6, eine Eingabetaste Option 19.7 und/oder eine Eingabetaste Home 19.8. Ferner ist in dem Hauptinformationsfeld 17 auch das Übersichtsfeld 18 im eingeklappten Zustand I angeordnet (s. Fig. 1). Dabei sind im eingeklappten Übersichtsfeld 18 zumindest die aktuellen Parameter 10.8 (in Felder 18.1 für die Parameter) des aktuellen Küchengeräts 10 sichtbar (s. Fig. 8). Somit erhält der Benutzer direkt einen Überblick, welche Parameter 10.8 des gerade aktiven Küchengeräts 10 vorliegen. Bei den Parametern 10.8 können sowohl die vorgebebenen Soll-Werte als auch die Ist-Werte für die jeweilige Gerätefunktion 10.7 angezeigt werden (s. Fig. 8 und. 9). Die Gerätefunktion 10.7 kann hierbei durch Icon 25 symbolisiert werden, um einen besseren Überblick zu erhalten. Ebenfalls kann im eingeklappten Übersichtsfeld 18 auch ein Icon 22 für das jeweilige aktive Küchengerät 10, vorzugsweise am linken Rand des Übersichtsfeldes 18 angezeigt werden.

Wie weiter aus der Figur 1 zu erkennen ist, befindet sich vorzugsweise unterhalb des Hauptinformationsfeldes 17 ein Erkennungsfeld 20, in dem der Gerätename des aktuellen Küchengeräts 10 angezeigt werden kann. Auch kann dieses Erkennungsfeld 20 den jeweiligen Arbeitsschritt 12.1 aus dem Rezept 12 anzeigen. In dem Bedienfeld 21, welches vorzugsweise unterhalb des Erkennungsfelds 20 angeordnet ist, ist der aktuelle Zustand des aktuellen Küchengeräts 10 dargestellt, wobei auch eine Anweisung für den aktuellen Arbeitsschritt 12.1 für den Benutzer angegeben wird. Zu diesem Zweck kann das Bedienfeld 21 in ein Zustandsfeld 21.1 (für das Küchengerät mit seinen Parametern) sowie ein Anweisungsfeld 21.2 (für eine Arbeitsanweisung für den Benutzer) unterteilt werden, wie in den Figuren 1 bis 3 dargestellt ist.

Das Besondere an dem eingeklappten Übersichtsfeld 18 ist nun, dass ohne ein Zutun des Benutzers die aktuelle Gerätefunktion 10.7 des aktuellen Küchengeräts 10 mit seinen Parametern 10.8 direkt angezeigt werden. Dabei kann der Benutzer über einen ersten Modus, wie bereits aufgeführt, die (automatisch wechselnde) Anzeige des entsprechenden Küchengerätes 10 anhand von seinen Vorgaben auswählen und priorisieren. Damit erhält der Benutzer sofort die Information, welches Küchengerät 10 derzeit aktiv ist und wie der genaue Zustand der ausgeführten und aktuellen Gerätefunktion 10.7 im Detail aussieht. Kommt es z. B. zu einem Warmhinweis bei einem der Küchengeräte 10 aus der Geräteliste, so kann durch diesen Warenhinweis das eingeklappte Übersichtsfeld 18 sofort das Küchengerät 10 mit dem Warnhinweis im Übersichtsfeld anzeigen. Auch ist es denkbar, dass sich das Übersichtsfeld automatisch durch diesen Warnhinweis ausklappt, um das aktuelle Küchengerät 10 mit dem Warnhinweis, vorzugsweise oben anzuzeigen.

Damit der Benutzer einen Überblick über sämtliche Küchengeräte 10 aus der Geräteliste von dem Küchengerätesystem 100 erhält, kann er durch eine Auswahl und Aktivierung des eingeklappten Übersichtsfeld 18 (aus Fig. 1) in das ausgeklappte Übersichtsfeld 18 (aus Fig. 2) wechseln. Im ausgeklappten Zustand II des Übersichtsfeld 18 ist nun - im vorliegenden Fall zeilenweise untereinander - das jeweilige Küchengerät 10 aus der Geräteliste mit seiner Gerätefunktion 10.7 und seinem Geräteparametern 10.8 angezeigt. Sofern die Größe der Benutzeroberfläche 16 nicht zur vollständigen Anzeige des ausgeklappten Übersichtsfeldes 18 geeignet ist, kann ein Scrollbalken 19.2 zum Scrollen der zeilenweise angezeigten Küchengeräte 10 im ausgeklappten Übersichtsfeld 18 vorhanden sein. Um einen optimalen Überblick für den Benutzer zu vermitteln, ist in jeder Zeile für ein Küchengerät 10 sowohl ein Icon 22 für das Küchengerät symbolisch dargestellt und ein Gerätenamen im Feld 18.2 sowie die Parameter 10.8 in den Feldern 18.2, um den aktuellen Zustand darzustellen. Durch die verwendeten Icons 22 ergibt sich eine intuitive Übersicht für den Benutzer zu den jeweiligen Küchengeräten 10 in der jeweiligen Zeile vom ausgeklappten Übersichtsfeld 18. Dabei ist es auch denkbar, dass die vorhandenen Küchengeräte 10 in den bereits erwähnten zweiten Modi (1. bis 5.) in der dargestellten Liste sortiert oder zusammengefasst werden. In der Figur 3 ist z. B. ein Balken zur Markierung 24 der beiden Zusatzthermometer 10.5 als ein Gerätetyp dargestellt. Wie erwähnt worden ist, kann auch eine andere Gruppierung oder Sortierung durch die einstellbaren Modis erreicht werden.

Damit der Benutzer auch im ausgeklappten Übersichtsfeld 18 intuitiv erfassen kann, welches Küchengerät 10 gerade aktiv ist, oder eine manuelle Tätigkeit erfordert oder einen Warnhinweis ausgesendet hat, kann eine Aktivierungsmarkierung 23 vorgesehen sein. Diese Aktivierungsmarkierung 23 kann bspw. aus einem Symbol, wie im vorliegenden Fall einem Sternchen ("*") bestehen (s. Figur 2 und 3). Auch kann das Icon 22 selbst als Aktivierungsmarkierung 23 dienen, indem z. B. eine Invertierung des Icons 22, wie in Figur 3, zum Zusatzthermometer 10.5 gezeigt ist, siehe die letzten beiden unteren Icons 22 in der Liste des ausgeklappten Übersichtsfelds 18. Alternativ könnte das Küchengerät 10, dass eine manuelle Tätigkeit bedarf, im ausgeklappten Zustand (II) des Übersichtsfeld 18 ganz oben stehen oder an der zweiten Stelle, da an der ersten Stelle ggf. immer das Hauptgerät 10 (vom Benutzer festgelegtes Küchengerät 10) angezeigt wird.

Aus den beiden Figuren 2 und 3 wird auch deutlich, dass das ausgeklappte Übersichtsfeld 18 das darunterliegende Bedienfeld 21 zumindest teilweise überlappt, sodass aber immer noch Bereiche des Bedienfelds 21, die nicht überlappt worden sind, sichtbar sind. Diese darunterliegenden Bereiche können auch farblich oder durch ihre Helligkeit abgesetzt werden, um die Übersicht zu verbessern.

In dem Bedienfeld 21 aus Figur 1 ist der aktuelle Zustand des jeweiligen Küchengeräts 10 im Zustandsfeld 21.1 dargestellt und der nächste, hier manuelle Arbeitsschritt 12.1 umfasst die Zugabe von 200 Gramm Wasser, was aus dem Anweisungsfeld 21.2 hervorgeht.

In der Figur 2 ist beispielhaft das Übersichtsfeld 18 im ausgeklappten Zustand II jeweils mit den Küchengeräten 10 aus der Geräteliste zeilenweise im Detail dargestellt. Durch die Auswahl und Aktivierung eines Küchengerätes 10 (in der jeweiligen Zeile) kann der Benutzer sofort zu diesem Gerät 10 wechseln, was dann entsprechend im Bedienfeld 21 angezeigt wird. Bei den letzten beiden Küchengeräten 10, gemeint sind die beiden Geräte aus den letzten beiden Zeilen, nämlich der Mikrowellen-Ofen und die elektrischen Pfanne, wird der Name bzw. die Bezeichnung sowie die aktuellen Parameter 10.8 zu den Küchengeräten 10 im Detail angezeigt. Danach findet bei dem Mikrowellen-Ofen 10 (vorletzte Zeile) mit der Bezeichnung "MW turbo 7" ein Heizvorgang mit Umluft durch einen Lüfter mit der Stufe 2 bei derzeit 123 °C (Ist-Temperatur) statt, wobei die Soll-Temperatur auf 160 °C eingestellt ist. Der Heizvorgang des Ofens soll noch 4 min andauern (Restzeit). Die elektrischen Pfanne 10 aus der letzten Zeile des Übersichtsfelds 18 ist mit der Bezeichnung "Pan X" versehen. Die aktuelle Ist-Temperatur beträgt 140 °C und hat damit die voreingestellte Soll-Temperatur von 140 °C erreicht. Die Restdauer des Bratvorgangs wird mit 17 min angezeigt. In der Figur 2 sind die angezeigten Küchengeräte 10 nicht nach Geräteklassen sortiert angezeigt, was man an den zeilenweise unterschiedlichen Gerätesymbolen erkennen kann.

Wie zuvor bereits erwähnt worden ist, können die jeweiligen Küchengeräte 10 nach Geräteklassen gruppiert und zeilenweise (im Übersichtsfeld 18 im ausgeklappten Zustand II) angezeigt werden (s. Fig. 3 - letzten beiden Zeilen). Zu den Geräteklassen gehören u.a. teilautomatisierte und vollautomatisierte Kochmixer, Backofen, einfache Koch- und Rührgeräte (mit reduziertem Funktionsumfang, z.B. rein manuelle Bedienung der Arbeitsschritte), Pfannen oder Temperatursensoren, die über ein (Geräteklassen)-Icon erkennbar und gruppiert sind. Pro Geräteklasse kann es mehrere (gleichartige) Küchengeräte 10 geben, die z. B. zeilenweise oder bereichsweise und auch abhängig von der Laufzeit von links nach rechts angeordnet sein können. In der ersten Zeile ist beispielsweise ein teilautomatisierte und vollautomatisierte Kochmixer durch ein (Geräteklassen)-Icon 22 angezeigt. Dieses Icon 22 kann gleichzeitig als Aktivierungsmarkierung 23 dienen, in dem es beispielsweise mit einer anderen Farbe oder invers zu den übrigen Icon 22 angezeigt wird. Die Aktivierungsmarkierung 23 für ein Küchengerät 10 kann auch ein gesondertes Symbol oder Icon (hier "*") umfassen, wie bereits erwähnt. In den letzten beiden Zeilen des ausgeklappten Übersichtsfelds 18 sind 2 Zusatzthermometer gezeigt, die zu einer Geräteklasse gruppiert benachbart und untereinander angezeigt werden. Durch die Gruppierung in Geräteklassen kann ebenfalls eine optische Zusammengehörigkeit für den Benutzer auf einfache Art hergestellt werden, die zusätzlich durch eine Markierung 24 beispielsweise in Form eines Balkens oder einer Umrandung etc. optisch hervorgehoben werden kann.

Um die Steuerung des erfindungsgemäßen Verfahrens insgesamt zu erleichtern, sind in dem Hauptinformationsfeld 17 die Steuerungsfelder 19 vorgesehen. Hierdurch kann durch die jeweiligen Steuerungsfelder entweder in dem Rezept 12 vor oder zurückgegangen werden, oder in den Ausgangspunkt durch die Hometaste gesprungen werden oder verschiedene Optionen durch die Optionstaste (z. B. Auswahl des Modus) ausgewählt werden.

Die Figur 4 zeigt eine erfindungsgemäße Vorrichtung 110 in Form eines Küchengeräts 10. Dabei ist dieses Küchengerät 10 als ein Küchengerät 10.1 mit komplexen Funktionen ausgestaltet. Zu den einzelnen Gerätefunktionen 10.7 zählt z. B. die Gerätefunktion 10.7a als Rührwerk, Gerätefunktion 10.7b als Heizung, die Gerätefunktion 10.7c als Waage und die Gerätefunktion 10.7d als Heizung. Darüber hinaus können noch weitere Gerätefunktionen 10.7 vorhanden sein, die jedoch nicht in der Figur 4 dargestellt sind. Ferner verfügt die Vorrichtung 110 über das zentrale Steuergerät 15, um das Küchengerätesystem 100 insgesamt kontrollieren und steuern zu können. Dafür ist ein Datenspeicher 15.1 sowie das Benutzereingabegerät 15.2 und die Schnittstelle 15.3 sowie eine Datenverarbeitungseinheit 15.4 vorgesehen. Das vorliegende Verfahren kann als Computerprogramm(-Produkt) im Datenspeicher 15.1 gespeichert sein und wird von der Datenverarbeitungseinheit 15.4 abgearbeitet. Das Benutzereingabegerät 15.2 kann mehrteilig ausgestaltet sein, nämlich mit einer Anzeige 15.2a und einem Multifunktionsknopf 15.2b. Vorteilhafterweise ist das Benutzereingabegerät 15.2 selbst als Touch-Screen ausgestaltet. Sofern jedoch eine Anzeige 15.2a ohne Touchfunktion zum Einsatz kommt, kann ein Cursor zur Auswahl und Aktivierung eines Steuerungsfeldes 19 oder eines sonstigen Feldes der Benutzeroberfläche 16 genutzt werden. Der Cursor kann hierbei bspw. durch den Multifunktionsknopf 15.2b gesteuert werden, wobei der Multifunktionsknopf 15.2b selbst drehbar, schwenkbar und drückbar ausgestaltet sein kann.

In der Figur 5 ist ein komplettes Küchengerätesystem 100 mit diversen Küchengeräten 10 dargestellt. Das erfindungsgemäße Verfahren findet dabei auf der Vorrichtung 110, die als Küchengerät 10 mit komplexen Funktionen gezeigt ist, statt. Bei dem Küchengerätsystem 100 ist bspw. auch ein Küchengerät 10.2 in Form eines Mixers, ein Küchengerät 10.3 in Form eines Ofens, ein Küchengerät 1.4 in Form eines Herdes sowie ein Küchengerät 10.5 in Form eines Zusatzthermometers vorgesehen. Selbstverständlich können noch weitere (mit verschiedenen oder gleichartigen Gerätefunktionen) Küchengeräte 10 bei diesem System 100 vorhanden sein. Die jeweiligen Küchengeräte 10 kommunizieren mit der erfindungsgemäßen Vorrichtung 110 über datentechnische Verbindungen 13, die vorzugsweise als drahtlose Verbindungen ausgestaltet sind. Hierzu weisen die jeweiligen Küchengeräte 10 jeweils eine (Daten-) Schnittstelle auf, die als WLAN- oder WiFi- oder UWB- oder Bluetooth-Schnittstelle oder andere Nahbereichsfunktechnologien bzw. lokale drahtlose Netzwerkverbindungen ausgestaltet sein kann. In dem Küchengerät 10.3, welches als Ofen ausgestaltet ist, ist auch eine Speise 11 dargestellt, genauso wie in der Pfanne 10.12 von dem Küchengerät 10.4 in Form eines Herdes.

Das Besondere in dem vorliegenden Küchengerätesystem 100 ist nun darin zu sehen, dass dieses anhand eines ausgesuchten Rezeptes 12 zumindest teilautomatisch durch das erfindungsgemäße Verfahren (mit allen Küchengeräte 12) angesteuert und kontrolliert wird. Um dem Benutzer einen intuitiven und optimalen Überblick über die jeweilige Situation und Zustand des Verfahrens zu verschaffen, ist die entsprechende Benutzeroberfläche 16 vorgesehen.

Anstelle des Küchengerätes 10.1 mit komplexer Funktion (aus Fig. 4 und 5) kann auch eine Vorrichtung 110, wie bspw. das Tablet aus Figur 6 dienen. Hierbei ist es von Vorteil, dass das zentrale Steuergerät 15 mit seinen weiteren Elementen bereits vollständig in einem derartigen Tablet integriert ist. Auch ist bei einem Tablet das Benutzereingabegerät 15.2 vorhanden, um die Benutzeroberfläche 16, wie bereits erwähnt, abzubilden. Da üblicherweise eine derartige Vorrichtung 110 auch über eine Kamera 112 und einen Lautsprecher 113 sowie ggf. eine Taste 111 verfügt, können auch weitere Funktionen, wie z. B. eine Onlinehilfe oder eine Teilnahme an einem Chatroom problemlos stattfinden.

In der Figur 7 ist bspw. ein Übersichtsfeld 18 im ausgeklappten Zustand II in einer Blockdarstellung (Kanban-Darstellung) gezeigt, wobei die jeweiligen Küchengeräte 10.1 mit den jeweiligen Gerätenamen 18.2 und den aktuellen Parametern 18.1 jeweils in einem Block dargestellt sind. Hierdurch kann ein Benutzer direkt einen umfassenden Überblick über das jeweilige Küchengerät 10 mit den (nächsten auszuführenden) Arbeitsschritten 12.1 aus dem Rezept 12 erhalten.

In den Figuren 1 und 2 sind, sind beispielshafte Details der Benutzeroberfläche 16 zum besseren Verständnis dargestellt. Insbesondere ist das Übersichtsfeld 18 im eingeklappten Zustand I mit den jeweiligen Parametern 18.1 im Detail in Figur 1 dargestellt. Danach findet ein Kochvorgang von 9 Minuten statt, wobei die eingestellte Soll-Temperatur 100°C beträgt und die aktuelle Ist-Temperatur 43°C erreicht hat. Gleichzeitig findet ein Rührvorgang in der Stufe 3 bei dem Küchengerät 10 statt.

Die voranstehende Erläuterung der Ausführungsformen beschreibt die vorliegende Erfindung ausschließlich im Rahmen von Beispielen. Auch können einzelne Merkmale der vorliegenden Erfindung, sofern technisch sinnvoll, im Rahmen der Ansprüche frei miteinander kombiniert werden.

### Bezugszeichenliste

- 10: Küchengerät, insbesondere mit zentralen Steuergeräten
- 10.1: Küchengerät, insbesondere mit komplexen Funktionen
- 10.2: Küchengerät, insbesondere Mixer
- 10.3: Küchengerät, insbesondere Ofen
- 10.4: Küchengerät, insbesondere Herd
- 10.5: Küchengerät, insbesondere Zusatzthermometer
- 10.7: Gerätefunktion
- 10.7a: Gerätefunktion als Rührwerk
- 10.7b: Gerätefunktion als Heizung
- 10.7c: Gerätefunktion als Waage
- 10.7d: Gerätefunktion als Heizung
- 10.8: Parameter, insbesondere Soll- und/oder Ist-Wert
- 10.9: Schnittstelle von 10
- 10.10: Behälter für 11
- 10.11: Deckel für 10.10
- 10.12: Pfanne / Topf
- 11: Speise
- 12: Rezept
- 12.1: Arbeitsschritte von 12
- 13: Verbindung (über Schnittstelle)

- 15: zentrales Steuergerät
- 15.1: Datenspeicher
- 15.2: Benutzereingabegerät
- 15.2a: Anzeige
- 15.2b: Multifunktionsknopf
- 15.3: Schnittstelle von 15
- 15.4: Datenverarbeitungseinheit, insbesondere Microprozessor
- 16: Benutzeroberfläche
- 17: Hauptinformationsfeld
- 18: Übersichtsfeld, ein- und ausklappbar
- 18.1: Feld für Parameter
- 18.2: Feld für Gerätename
- 19: Steuerungsfeld
- 19.1: Eingabetaste
- 19.2: Scrollbalken
- 19.5: Eingabetaste zurück
- 19.6: Eingabetaste vor
- 19.7: Eingabetaste Option
- 19.8: Eingabetaste Home
- 20: Erkennungsfeld

- 21: Bedienfeld
- 21.1: Zustandsfeld für 10
- 21.2: Anweisungsfeld für Arbeitsschritt
- 22: Icon für 10
- 23: Aktivierungsmarkierung, insbesondere für 10
- 24: Markierung
- 25: Icon für Parameter

- 100: Küchengerätesystem
- 110: Vorrichtung
- 111: Taste
- 112: Kamera
- 113: Lautsprecher
- 120: Computerprogrammprodukt

- I: eingeklappter Zustand von 17
- II: ausgeklappter Zustand von 17

## Patentansprüche

1. Verfahren zur Kontrolle eines Küchengerätesystems (100), zur automatischen Abarbeitung wenigstens eines Arbeitsschrittes (12.1) eines Rezeptes (12) für eine Zubereitung einer Speise (11), mit Hilfe eines zentralen Steuergerätes (15) mit zumindest einem Benutzereingabegerät (15.2) und einer Schnittstelle (15.3),
wobei das Küchengerätesystem (100) zumindest 2 Küchengeräte (10) umfasst, die in einer Geräteliste eingetragen sind und
jedes Küchengerät (10) aus der Geräteliste eine Schnittstelle (10.9) aufweist, wodurch diese von dem zentralen Steuergerät (15) kontrollierbar ist,
wobei jedes Küchengerät (10) über zumindest eine Gerätefunktion (10.7) verfügt, die durch wenigstens einen Parameter (10.8) auswählbar und/oder einstellbar ist, um wenigstens einen Arbeitsschritt (12.1) aus dem Rezept (12) für die Zubereitung der Speise (11) automatisch durch die jeweilige Gerätefunktion (10.7) des Küchengerätes (10) durchzuführen,
wobei das Benutzereingabegerät (15.2) eine Benutzeroberfläche (16) zur Anzeige und Steuerung des Verfahrens aufweist,
**dadurch gekennzeichnet, dass**
die Benutzeroberfläche (16) zumindest ein ein- und ausklappbares Übersichtsfeld (18) aufweist,
welches im eingeklappten Zustand (I) des Übersichtsfelds (18) Parameter (10.8) von einem Küchengerät (10) des Küchengerätesystems (100) anzeigt und
in einem ausgeklappten Zustand (II) des Übersichtsfelds (18) zumindest teilweise oder die gesamte Geräteliste des Küchengerätesystems (100) anzeigt, wobei Parameter (10.8) von zumindest jedem aktiven Küchengerät (10) mit der jeweiligen Gerätefunktion (10.7) angezeigt werden.

2. Kontrollverfahren nach Anspruch 1,
**dadurch gekennzeichnet,**
**dass** im eingeklappten Zustand (I) des Übersichtsfelds (18) von nur einem Küchengerät (10) des Küchengerätesystems (100) ausschließlich Parameter (10.8) über zumindest eine aktuelle Gerätefunktion (10.7), vorzugsweise:
• Zeitangabe, insbesondere über die Restzeit der Gerätefunktion (10.7)
• Temperatur, insbesondere Soll- und/oder Ist-Temperatur
• Gewicht und/oder Art der Speise
• Rührfunktion, insbesondere Rührstufe oder Drehzahl
• Heizbetrieb beim Ofen
• Feuchtigkeitsangabe
• Ventilatorbetrieb
• Füllstand (Kaffeemaschine Wasser/Kaffee/Milch)
• Verbrauchsstand usw.
angezeigt wird und
in einem ausgeklappten Zustand (II) des Übersichtsfelds (18) die Geräteliste des Küchengerätesystems (100) angezeigt werden, wobei jedes Küchengerät (10) aus der Geräteliste mit einem Icon (22) symbolisiert ist und einen Gerätenamen aufweist, und
vorzugsweise gleichzeitig Parameter (10.8) von jedem Küchengerät (10) mit der jeweiligen Gerätefunktion (10.7) abschnittsweise angezeigt werden.

3. Kontrollverfahren nach Anspruch 1 oder 2,
**dadurch gekennzeichnet,**
**dass** für jedes Küchengerät (10) in der Geräteliste zumindest eine Aktivierungsmarkierung (23) im ein- und ausklappbaren Übersichtsfeld (18) angezeigt wird, wobei die Aktivierungsmarkierung (23) anzeigt, ob zumindest das Küchengerät (10) ein- oder ausgeschaltet ist
das Küchengerät (10) durch das Verfahren erreichbar und/oder ansteuerbar ist zumindest eine Gerätefunktion (10.7) des Küchengeräts (10) aktiv ist,
wobei vorzugsweise das jeweilige Icon (22) des Küchengeräts (10) gleichzeitig als Aktivierungsmarkierung (23) dient.

4. Kontrollverfahren nach einem der vorherigen Ansprüche,
**dadurch gekennzeichnet,**
**dass** ein Wechsel zwischen dem eingeklappten und dem ausgeklappten Zustand (I, II) des Übersichtsfelds (18) durch eine Aktivierung erfolgt,
wobei die Aktivierung durch eine manuelle Auswahl und/oder ein Triggersignal und/oder durch ein eingehendes Warnsignal von einem Küchengerät (10) und/oder zeitabhängig ansteuerbar ist,
wobei vorzugsweise ein eingehendes Triggersignal und/oder Warnsignal von einem Küchengerät (10) das Übersichtsfeld (18) derart verändert,
**dass** das entsprechende Küchengerät (10) mit einem Warnhinweis bevorzugt, insbesondere mit seiner Gerätefunktion (10.7) angezeigt wird.

5. Kontrollverfahren nach einem der vorherigen Ansprüche, **dadurch gekennzeichnet,**
**dass** mehrere Küchengeräte (10) zu wenigstens einer Geräteklasse zusammengefügt werden,
wobei vorzugsweise im ausgeklappten Zustand (II) des Übersichtsfelds (18) die Geräteliste mit den vorhandenen Geräteklasse angezeigt werden, und
wobei insbesondere sämtliche Küchengeräte (10) in einer Geräteklasse vorzugsweise mit der jeweiligen Gerätefunktion (10.7) anzeigt werden.

6. Kontrollverfahren nach einem der vorherigen Ansprüche,
**dadurch gekennzeichnet,**
**dass** im eingeklappten Zustand (I) des Übersichtsfelds (18) das angezeigte Küchengerät (10) durch einen vom Benutzer bzw. vordefinierten einstellbaren ersten Modus angezeigt wird und im ausgeklappten Zustand (II) des Übersichtsfelds (18) die Geräteliste ebenfalls in einem vom Benutzer bzw. vordefinierten einstellbaren zweiten Modus angezeigt werden kann, wobei die Reihenfolge der Küchengeräte (10) in einem
1. Modus die Geräte (10) nach Gerätklassen,
2. Modus die Geräte (10) nach ihrer Aktivität
3. Modus die Geräte (10) nach einer Priorisierung,
4. Modus die Geräte (10) nach einer (zeitlichen) Reihenfolge der nächsten Arbeitsschritte (12.1) aus dem Rezept (12) und
5. Modus die Geräte (10) nach einem Warnsignal
angezeigt werden,
wobei insbesondere der Modus auswählbar ist und die Reihenfolge der angezeigten Küchengeräte (10) veränderbar ist.

7. Kontrollverfahren nach einem der vorherigen Ansprüche,
**dadurch gekennzeichnet,**
**dass** die Benutzeroberfläche (16) neben dem ein- und ausklappbaren Übersichtsfeld (18) auch zumindest ein Bedienfeld (21) für zumindest eine Gerätefunktion (10.7) des Küchengeräts (10) aufweist,
wobei vorzugsweise das Bedienfeld (21) des Küchengeräts (10) und das eingeklappte Übersichtsfeld (18) gleichzeitig angezeigt werden.

8. Kontrollverfahren nach einem der vorherigen Ansprüche,
**dadurch gekennzeichnet,**
**dass** die Benutzeroberfläche (16) des Benutzereingabegeräts (15.2) einzelne Felder anzeigt, die gleichzeitig als Eingabetasten (19.1) und/oder Scrollbalken (19.2) zur Steuerung des Verfahrens durch das zentrale Steuergerät (15) dienen,
wodurch anhand von eingegebenen Parametern (10.8), die mit Hilfe der Benutzeroberfläche (16) eingegeben worden sind, zumindest eine Gerätefunktion (10.7) eines Küchengeräts (10) ausgelöst wird.

9. Kontrollverfahren nach einem der vorherigen Ansprüche,
**dadurch gekennzeichnet,**
**dass** die Benutzeroberfläche (16) ein Hauptinformationsfeld (17) mit Steuerungsfeldern (19) für das Verfahren aufweist, wobei das Übersichtsfeld (18) im eingeklappten Zustand (I) im Hauptinformationsfeld (17) integriert ist,
und wobei das Bedienfeld (21) neben, vorzugsweise unterhalb des Hauptinformationsfelds (17) gemeinsam angezeigt wird.

10. Kontrollverfahren nach Anspruch 9,
**dadurch gekennzeichnet,**
**dass** das Übersichtsfeld (18) im ausgeklappten Zustand (II) das Bedienfeld (21) zumindest teilweise überlappt, um eine Auswahl des anzusteuernden Küchengerätes (10) aus der Gerätliste vornehmen zu können.

11. Kontrollverfahren nach einem der vorherigen Ansprüche,
**dadurch gekennzeichnet,**
**dass** die Schnittstelle (10.9) des jeweiligen Küchengeräts (10) als drahtlose Schnittstelle (10.9) ausgestaltet ist,
wobei insbesondere die Schnittstelle (10.9) als Nahbereichsfunktechnologie-Schnittstelle oder lokale drahtlose Netzwerkverbindungs-Schnittstelle ausgestaltet ist, wobei bevorzugt ein geschützter verschlüsselter Datenaustausch über die Schnittstellen (10.9) erfolgt.

12. Vorrichtung (110) zur Kontrolle eines Küchengerätesystems (100), zur automatischen Abarbeitung wenigstens eines Arbeitsschrittes (12.1) eines Rezeptes (12) für eine Zubereitung einer Speise (11), mit einem zentralen Steuergerät (15) und
zumindest einem Benutzereingabegerät (15.2) und einer Schnittstelle (15.3),
wobei das zentrale Steuergerät (15) dazu ausgebildet ist, das Verfahren gemäß der vorherigen Ansprüche auszuführen, **dadurch gekennzeichnet,**
**dass** die Vorrichtung (110) selbst als Küchengerät (10) ausgestaltet ist und
das Küchengerät (10) zumindest
einen Behälter (10.10) für die Zubereitung der Speise (11),
ein Rührwerk (10.7a), welches in den Behälter (10.10) hineinragt, und
das zentrale Steuergerät (15) mit zumindest dem Benutzereingabegerät (15.2) und der Schnittstelle (15.3) aufweist.

13. Computerprogrammprodukt (120) umfassend Befehle, die bewirken, dass die Vorrichtung (110) nach Anspruch 12 das Verfahren mit den erforderlichen Verfahrensschritten nach Anspruch 1 bis 11 ausführt.

## Claims

1. A method for controlling a kitchen appliance system (100), for automatically processing at least one working stage (12.1) of a recipe (12) for preparing a food (11), with the aid of a central control device (15) having at least one user input device (15.2) and an interface (15.3),
wherein the kitchen appliance system (100) comprises at least two kitchen appliances (10) registered in an appliance list and
each kitchen appliance (10) from the appliance list has an interface (10.9), whereby it can be controlled by the central control device (15),
wherein each kitchen appliance (10) has at least one appliance function (10.7) which is selectable and/or adjustable by at least one parameter (10.8) in order to perform at least one working stage (12.1) from the recipe (12) for the preparation of the food (11) automatically by the respective appliance function (10.7) of the kitchen appliance (10), wherein the user input device (15.2) has a user interface (16) for displaying and controlling the method,
**characterized in that**
the user interface (16) comprises at least one overview panel (18) which can be folded and unfolded,
which, in the folded state (I) of the overview panel (18), displays parameters (10.8) of a kitchen appliance (10) of the kitchen appliance system (100), and
in an unfolded state (II) of the overview panel (18) displays at least partially or the entire appliance list of the kitchen appliance system (100), wherein parameters (10.8) of at least each active kitchen appliance (10) with the respective appliance function (10.7) are displayed.

2. The method for controlling according to claim 1,
**characterized in that**
in the folded state (I) of the overview panel (18), of only one kitchen appliance (10) of the kitchen appliance system (100), exclusively parameters (10.8) about at least one current appliance function (10.7), preferably:
• time information, in particular about the remaining time of the appliance function (10.7)
• temperature, in particular setpoint and/or actual temperature
• weight and/or type of food
• stirring function, in particular stirring stage or speed
• heating operation at the oven
• moisture specification
• fan operation
• filling level (coffee machine water/coffee/milk)
• consumption level etc.
are displayed and
in an unfolded state (II) of the overview panel (18), the appliance list of the kitchen appliance system (100) is displayed, each kitchen appliance (10) from the appliance list being symbolized with an icon (22) and having an appliance name, and preferably parameters (10.8) of each kitchen appliance (10) with the respective appliance function (10.7) are displayed section by section at the same time.

3. The method for controlling according to claim 1 or 2,
**characterized in that**
for each kitchen appliance (10) in the appliance list at least one activation marker (23) is displayed in the foldable and unfoldable overview panel (18), the activation marker (23) indicating whether at least
• the kitchen appliance (10) is switched on or off,
• the kitchen appliance (10) can be reached and/or controlled by the method,
• at least one appliance function (10.7) of the kitchen appliance (10) is active,
wherein preferably the respective icon (22) of the kitchen appliance (10) simultaneously serves as an activation marker (23).

4. The method for controlling according to any one of the preceding claims, **characterized in that**
a change between the folded and the unfolded state (I, II) of the overview panel (18) takes place by means of an activation,
wherein the activation is controllable by a manual selection and/or a trigger signal and/or by an incoming warning signal from a kitchen appliance (10) and/or time-dependently,
wherein preferably an incoming trigger signal and/or warning signal from a kitchen appliance (10) changes the overview panel (18) in such a way that the corresponding kitchen appliance (10) is displayed with a warning preferably, in particular with its appliance function (10.7).

5. The method for controlling according to any one of the preceding claims, **characterized in that**
several kitchen appliances (10) are combined into at least one appliance class, wherein preferably in the unfolded state (II) of the overview panel (18) the appliance list with the existing appliance classes is displayed, and
wherein in particular all kitchen appliances (10) in an appliance class are displayed preferably with the respective appliance function (10.7).

6. The method for controlling according to any one of the preceding claims, **characterized in that**
in the folded state (I) of the overview panel (18) the displayed kitchen appliance (10) is displayed by a first mode adjustable by the user or predefined and in the unfolded state (II) of the overview panel (18) the appliance list can also be displayed in a second mode adjustable by the user or predefined, wherein the order of the kitchen appliances (10) is such that in a
1. mode, the appliances (10) are displayed by appliance classes,
2. mode, the appliances (10) are displayed according to their activity,
3. mode, the appliances (10) are displayed according to a prioritization,
4. mode, the appliances (10) are displayed according to a (time) sequence of the next working stages (12.1) from the recipe (12), and
5. mode, the appliances (10) are displayed according to a warning signal,
wherein in particular the mode is selectable and the order of the displayed kitchen appliances (10) is changeable.

7. The method for controlling according to any one of the preceding claims, **characterized in that**
the user interface (16) also has at least one control panel (21) for at least one appliance function (10.7) of the kitchen appliance (10) in addition to overview panel (18) which can be folded and unfolded,
wherein preferably the control panel (21) of the kitchen appliance (10) and the folded overview panel (18) are displayed simultaneously.

8. The method for controlling according to any one of the preceding claims, **characterized in that**
the user interface (16) of the user input device (15.2) displays individual panels which simultaneously serve as input keys (19.1) and/or scroll bars (19.2) for controlling the method by the central control device (15),
whereby at least one appliance function (10.7) of a kitchen appliance (10) is triggered on the basis of entered parameters (10.8) which have been entered with the aid of the user interface (16).

9. The method for controlling according to any one of the preceding claims, **characterized in that**
the user interface (16) has a main information panel (17) with control panels (19) for the method, the overview panel (18) being integrated in the main information panel (17) in the folded state (I),
and wherein the control panel (21) is displayed together next to, preferably below, the main information panel (17).

10. The method for controlling according to claim 9,
**characterized in that**
the overview panel (18) in the unfolded state (II) at least partially overlaps the control panel (21) in order to be able to select the kitchen appliance (10) to be controlled from the appliance list.

11. The method for controlling according to any one of the preceding claims, **characterized in that**
the interface (10.9) of the respective kitchen appliance (10) is configured as a wireless interface (10.9),
wherein in particular the interface (10.9) is configured as a short-range radio technology interface or local wireless network connection interface,
wherein preferably a protected encrypted data exchange takes place via the interfaces (10.9).

12. A device (110) for controlling a kitchen appliance system (100), for automatically processing at least one working stage (12.1) of a recipe (12) for preparing a food (11), having a central control device (15) and
at least one user input device (15.2) and an interface (15.3),
wherein the central control device (15) is adapted to perform the method according to the preceding claims,
**characterized in that**
the device (110) itself is configured as a kitchen appliance (10) and
the kitchen appliance (10) comprises at least
a container (10.10) for the preparation of the food (11),
an agitator (10.7a) which projects into the container (10.10), and
the central control device (15) with at least the user input device (15.2) and the interface (15.3).

13. A computer program product (120) comprising instructions which cause the device (110) according to claim 12 to execute the method with the required method steps according to claims 1 to 11.

## Revendications

1. Procédé de contrôle d'un système d'appareils de cuisine (100), destiné à l'exécution automatique d'au moins une étape de travail (12.1) d'une recette (12) pour la préparation d'un plat (11), à l'aide d'un appareil de commande central (15) comportant au moins un dispositif de saisie utilisateur (15.2) et une interface (15.3),
le système d'appareils de cuisine (100) comprenant au moins deux appareils de cuisine (10) qui sont enregistrés dans une liste d'appareils, et
chaque appareil de cuisine (10) de la liste d'appareils comportant une interface (10.9), grâce à laquelle il peut être contrôlé par l'appareil de commande central (15),
chaque appareil de cuisine (10) disposant d'au moins une fonction (10.7) pouvant être sélectionnée et/ou réglée à l'aide d'au moins un paramètre (10.8) afin d'exécuter automatiquement au moins une étape de travail (12.1) de la recette (12) pour la préparation du plat (11) par la fonction d'appareil correspondante (10.7) de l'appareil de cuisine (10),
le dispositif de saisie utilisateur (15.2) comportant une interface utilisateur (16) pour l'affichage et la commande du procédé,
**caractérisé en ce que**
l'interface utilisateur (16) comporte au moins un panneau de synthèse (18) pouvant être déployé et replié,
qui, à l'état replié (I) du panneau de synthèse (18), affiche des paramètres (10.8) d'un appareil de cuisine (10) du système d'appareils de cuisine (100) et, dans un état déployé (II) du panneau de synthèse (18), affiche au moins partiellement ou totalement la liste des appareils du système d'appareils de cuisine (100), les paramètres (10.8) d'au moins chaque appareil de cuisine actif (10) étant affichés avec la fonction d'appareil correspondante (10.7).

2. Procédé de contrôle selon la revendication 1,
**caractérisé en ce que**,
lorsque le panneau de synthèse (18) est replié (I), seuls les paramètres (10.8) relatifs à au moins une fonction actuelle (10.7) d'un seul appareil de cuisine (10) du système d'appareils de cuisine (100) sont affichés, de préférence :
• une indication de temps, notamment le temps restant de la fonction de l'appareil (10.7)
• la température, notamment la température de consigne et/ou la température réelle
• le poids et/ou le type d'aliment
• la fonction de mélange, notamment le niveau de mélange ou la vitesse de rotation
• le mode de chauffage du four
• l'indication d'humidité
• le fonctionnement du ventilateur
• le niveau de remplissage (machine à café : eau/café/lait)
• niveau de consommation, etc.
et que, lorsque le panneau de synthèse (18) est déployé (II), la liste des appareils du système d'appareils de cuisine (100) s'affiche, chaque appareil de cuisine (10) de la liste étant symbolisé par une icône (22) et comportant un nom d'appareil, et
de préférence que simultanément les paramètres (10.8) de chaque appareil de cuisine (10) avec la fonction correspondante (10.7) sont affichés par sections.

3. Procédé de contrôle selon la revendication 1 ou 2,
**caractérisé en ce que**,
pour chaque appareil de cuisine (10) de la liste des appareils, au moins un indicateur d'activation (23) s'affiche dans le panneau de synthèse (18) pouvant être déployé et replié, l'indicateur d'activation (23) indiquant si au moins
l'appareil de cuisine (10) est allumé ou éteint,
l'appareil de cuisine (10) est accessible et/ou commandable par le procédé,
au moins une fonction de l'appareil (10.7) de l'appareil de cuisine (10) est active, l'icône correspondante (22) de l'appareil de cuisine (10) servant de préférence simultanément d'indicateur d'activation (23).

4. Procédé de contrôle selon l'une des revendications précédentes,
**caractérisé en ce qu'**un basculement entre l'état replié et l'état déployé (I, II) du panneau de synthèse (18) s'effectue par une activation,
ladite activation pouvant être déclenchée par une sélection manuelle et/ou un signal de déclenchement et/ou par un signal d'alerte entrant provenant d'un appareil de cuisine (10) et/ou en fonction du temps,
un signal de déclenchement et/ou un signal d'alerte entrant provenant d'un appareil de cuisine (10) modifiant de préférence le panneau de synthèse (18) de telle sorte que l'appareil de cuisine correspondant (10) soit affiché avec un message d'alerte, de préférence avec sa fonction (10.7).

5. Procédé de contrôle selon l'une des revendications précédentes,
**caractérisé en ce que**
plusieurs appareils de cuisine (10) sont regroupés en au moins une classe d'appareils, la liste des appareils avec les classes d'appareils existantes étant de préférence affichée lorsque le panneau de synthèse (18) est déployé (II), et
tous les appareils de cuisine (10) d'une classe d'appareils étant notamment affichés de préférence avec la fonction d'appareil respective (10.7).

6. Procédé de contrôle selon l'une des revendications précédentes, **caractérisé en ce que**,
à l'état replié (I) du panneau de synthèse (18), l'appareil de cuisine (10) affiché est présenté selon un premier mode défini par l'utilisateur ou prédéfini et réglable, et à l'état déployé (II) du panneau de synthèse (18), la liste des appareils peut également être affichée dans un deuxième mode défini par l'utilisateur ou prédéfini et réglable, l'ordre des appareils de cuisine (10) étant tel que,
• dans un 1er mode, les appareils (10) sont classés par classes d'appareils,
• dans un 2e mode, les appareils (10) sont classés selon leur activité,
• dans un 3e mode, les appareils (10) sont classés selon un ordre de priorité,
• dans un quatrième mode, les appareils (10) sont classés selon un ordre (chronologique) des prochaines étapes de travail (12.1) de la recette (12) et
• dans un cinquième mode, les appareils (10) sont affichés en fonction d'un signal d'alerte,
le mode étant notamment sélectionnable et l'ordre d'affichage des appareils de cuisine (10) pouvant être modifié.

7. Procédé de contrôle selon l'une des revendications précédentes,
**caractérisé en ce que**
l'interface utilisateur (16) comporte, outre le panneau de synthèse (18) pouvant être déployé et replié, au moins un panneau de commande (21) pour au moins une fonction de l'appareil (10.7) de l'appareil de cuisine (10),
le panneau de commande (21) de l'appareil de cuisine (10) et le panneau de synthèse (18) replié étant de préférence affichés simultanément.

8. Procédé de contrôle selon l'une des revendications précédentes,
**caractérisé en ce que**
l'interface utilisateur (16) du dispositif de saisie utilisateur (15.2) affiche des champs individuels qui servent à la fois de touches de saisie (19.1) et/ou de barres de défilement (19.2) pour la commande du procédé par l'appareil de commande central (15),
ce qui permet de déclencher, à l'aide de paramètres (10.8) saisis via l'interface utilisateur (16), au moins une fonction (10.7) d'un appareil de cuisine (10).

9. Procédé de contrôle selon l'une des revendications précédentes,
**caractérisé en ce que**
l'interface utilisateur (16) comporte un champ d'informations principal (17) avec des champs de commande (19) pour le procédé, le panneau de synthèse (18) étant intégré, à l'état replié (I), dans le champ d'informations principal (17),
et le panneau de commande (21) s'affiche à côté, de préférence en dessous du champ d'informations principal (17).

10. Procédé de contrôle selon la revendication 9,
**caractérisé en ce que**,
à l'état déployé (II), le panneau de synthèse (18) recouvre au moins partiellement le panneau de commande (21) afin de permettre la sélection de l'appareil de cuisine (10) à commander à partir de la liste des appareils.

11. Procédé de contrôle selon l'une des revendications précédentes,
**caractérisé en ce que**
l'interface (10.9) de l'appareil de cuisine (10) concerné est conçue comme une interface sans fil (10.9),
l'interface (10.9) étant notamment conçue comme une interface utilisant une technologie de communication sans fil à courte portée ou comme une interface de connexion à un réseau sans fil local,
un échange de données crypté et sécurisé s'effectuant de préférence via les interfaces (10.9).

12. Dispositif (110) destiné au contrôle d'un système d'appareils de cuisine (100), pour l'exécution automatique d'au moins une étape de travail (12.1) d'une recette (12) en vue de la préparation d'un plat (11), comprenant un appareil de commande central (15) et
au moins un dispositif de saisie utilisateur (15.2) et une interface (15.3),
l'appareil de commande central (15) étant conçu pour exécuter le procédé selon les revendications précédentes,
**caractérisé en ce que** le dispositif (110) est lui-même conçu comme un appareil de cuisine (10) et
que l'appareil de cuisine (10) comprend au moins
un récipient (10.10) destiné à la préparation du plat (11),
un agitateur (10.7a) qui s'étend dans le récipient (10.10), et
l'appareil de commande central (15) comprenant au moins le dispositif de saisie utilisateur (15.2) et l'interface (15.3).

13. Produit programme d'ordinateur (120) comprenant des instructions qui amènent le dispositif (110) selon la revendication 12 à exécuter le procédé comprenant les étapes nécessaires selon les revendications 1 à 11.
